# EUROPEAN PATENT APPLICATION

(11) **EP 2 455 155 A1**
(43) Date of publication of application: **23.05.2012**
(21) Application number: 10797054.3
(22) Date of filing: 30.06.2010
(51) Int. Cl.: B01D 63/08, B01D 63/00, B01D 65/02, B01D 71/36, C02F 3/12

(54) **FLAT MEMBRANE ELEMENT FOR FILTRATION, FLAT MEMBRANE TYPE SEPARATION MEMBRANE MODULE, AND FILTRATION DEVICE**

(30) Priority: 10.07.2009 JP 2009164123
(71) Applicant: Sumitomo Electric Fine Polymer, Inc., Sennan-gun, Osaka 590-0458 (JP)
(72) Inventor: MORITA, Toru, Sennan-gun Osaka 590-0458 (JP); KAWABE, Shinsuke, Sennan-gun Osaka 590-0458 (JP); UEOOTANI, Kaoru, Sennan-gun Osaka 590-0458 (JP)
(74) Representative: Setna, Rohan P.
(86) International application number: PCT/JP2010/061107
(87) International publication number: WO 2011/004743

(57) **Abstract**

A flat-membrane element is rendered likely to vibrate by air bubbling from an aeration tube. The element has a sheet-shaped filtering membrane that has oppositely positioned portions placed with a space between them being provided as a flowing path for a treated liquid, a supporter that is placed between the oppositely positioned portions of the filtering membrane to secure the space as a flowing path for a treated liquid, and a periphery-sealing portion that seals the peripheral edges of the oppositely positioned portions of the filtering membrane with a treated-liquid outlet being provided. The filtering membrane and supporter are formed of flexible material and the periphery-sealing portion has flexibility, thereby rendering the entire element flexible. The flat-membrane element has a total thickness of 6 to 1 mm.

## Description

### Technical Field

The present invention relates to a filtration purpose flat-membrane element, a flat-membrane-type separation membrane module and a filtration apparatus, all of which are used for a filtration apparatus for performing solid-liquid separation treatment in the environmental-preservation field, the medicine and food field, and so on.

### Background Art

A separation membrane module formed by bundling together a plurality of filtration purpose porous separation membranes is mounted in an immersion-type suction filtration apparatus or an external-pressure filtration apparatus for filtering a treatment-undergoing liquid such as river water, domestic wastewater, industrial wastewater, and so on, all of which contain suspended matter.

As for the membrane module, conventionally, the following two types have been generally used: one is a hollow-fiber membrane module, which has a structure in which a multitude of hollow-fiber membranes are bundled together in the shape of a circle and their end portions are fixed with a fixing member, while the opened condition of the fibers being maintained, to form a water-gathering portion, and the other is a flat membrane module, which is provided with a plurality of flat-membrane-type membrane elements each of which has a sheet-shaped porous membrane supported by a supporting plate.
As for the foregoing hollow-fiber membrane module, the present applicant has proposed a filtration module having bundled multilayer porous hollow fibers in the published Japanese patent application Tokukai 2006-7224 (Patent Literature 1).
As for the flat-membrane-type separation membrane module, a porous membrane made of polyolefin-based resin such as chlorinated polyethylene or a porous membrane made of polyvinylidene difluoride (PVDF)-based resin such as the one stated in the published Japanese patent application Tokukai 2004-182919 (Patent Literature 2) have been conventionally used.

When the treatment of high-turbidity wastewater is continued by using the filtration apparatus incorporating the above-described membrane module, suspended matter contained in the treatment-undergoing liquid is deposited both on the surface of the membrane and between the membranes. When the amount of deposition is increased, clogging occurs at the membrane, decreasing the flow rate of the permeating water.
In particular, in the treatment of highly polluted water by the membrane bioreactor process, the treated liquid is highly viscous and contamination (biofouling) of the membrane occurs owing to the adhesive deposited matter specific to the biological treatment. As a result, in comparison with the filtration for the general wastewater system, the suspended matter tends to be deposited on the filtration membrane, considerably decreasing the flow rate of the permeating water owing to the adhering of the deposited matter and the clogging. Consequently, in the filtration apparatus incorporating the membrane module, cleaning operation (aeration treatment) is usually performed as described below. During the operation of the apparatus, pressurized air is sent from an aeration tube to generate air bubbling or the like to create a stream of wastewater. The stream peels off the deposited matter and vibrates the filtering membrane to remove the deposited matter by the action of the mechanical load.
As a result, the membrane module and the filtering membrane element constituting the membrane module are required to have high filtering performance, strength for withstanding the mechanical load at the time of long-time operation, and, in particular, excellent chemical resistance against an oxidizing agent, acid, and alkali.

### Citation List

### Patent Literature

Patent Literature 1: the published Japanese patent application Tokukai 2006-7224
Patent Literature 2: the published Japanese patent application Tokukai 2004-182919.

### Summary of Invention

### Technical Problem

The hollow-fiber membrane module stated in Patent Literature 1 described above generally has advantages in that the placement area per effective membrane area can be reduced and it has excellent compactness. Nevertheless, when a hollow-fiber membrane module that has a compact structure in which the spacing between the neighboring hollow fibers is narrowed is applied to the treatment of high-turbidity wastewater, particularly a highly viscous treatment-undergoing liquid, by the membrane bioreactor process, the stream of treatment-undergoing liquid produced by the aeration becomes relatively slow. As a result, suspended matter tends to be deposited both on the surface of the membrane and between the membranes, causing the treatment rate to decrease. As described above, when a hollow-fiber membrane module is applied to the membrane bioreactor process treating a highly viscous treatment-undergoing liquid, the treatment rate decreases. To prevent this decrease, the distance between the neighboring hollow fibers must be increased. As a result, the placement area is increased, rendering it impossible to form a compact filtration apparatus.

On the other hand, the flat-membrane-type separation membrane module has an advantage in that because it has a structure in which sheet-shaped flat-membrane elements are placed in proper arrangement, the aeration is easily performed throughout the membrane surface, so that the cleaning operation of the membrane surface can be conducted effectively. In the conventional flat-membrane element, however, the member for supporting the filtering membrane, or both the supporting member for supporting the oppositely positioned filtering membranes with the distance between the membranes being maintained and the frame, or both are rigid in many cases. Consequently, even when air bubbling is generated by an aeration tube, almost no vibration of the filtering membrane occurs. As a result, solidified matter adhering to the surface of the membrane is peeled off only by the action of the flowing speed of the swirl flow produced by the aeration. In other words, the effect of the peeling-off of the deposited mater adhering to the surface of the filtering membrane is limited, so that the fouling is likely to occur, which is a problem. To increase the flowing speed of the swirl flow so that the peeling-off effect of the deposited mater can be increased, it is necessary to increase the quantity of the air supplied to the aeration tube for ejecting air. As a result, the quantity of the air supplied to the aeration tube is generally about two times that of the above-described hollow-fiber membrane module. This means that the driving energy of the blower for feeding air to the aeration tube is increased, so that the running cost is increased, which creates a problem.
Furthermore, in the flat-membrane-type separation membrane module, each of the supporter material and the flowing path between the oppositely positioned filtering membranes has a large volume percentage in the flat-membrane element. This large volume percentage increases the placement space per membrane area, worsening the efficiency of the treatment of the treatment-undergoing liquid, which is another problem.

The present invention is made in light of the above-described problems. An object of the present invention is to cause the flat-membrane element to easily vibrate by the air bubbling from the aeration tube so that the deposited mater adhering to the surface of the filtering membrane can be easily peeled off. Another object is to miniaturize the entire flat-membrane element without decreasing the filtering area.

### Solution to Problem

To solve the above-described problem, the present invention offers a filtration purpose flat-membrane element that has:
(a) a sheet-shaped filtering membrane that has oppositely positioned portions placed with a space between them being provided as a flowing path for a treated liquid;
(b) a supporter that is placed between the oppositely positioned portions of the filtering membrane to secure the space as a flowing path for a treated liquid; and
(c) a periphery-sealing portion that seals the peripheral edges of the oppositely positioned portions of the filtering membrane with a treated-liquid outlet being provided.
In the flat-membrane element, the filtering membrane and the supporter are formed by using flexible material and the periphery-sealing portion has flexibility, thereby rendering the entire element flexible. The flat-membrane element has a total thickness of 6 to 1 mm.

In the foregoing periphery-sealing portion (the end-sealing portion), the peripheral edges at both sides of the oppositely positioned portions of the filtering membrane are welded or bonded to be sealed. In the direction perpendicular to the sealed face, the peripheral edges at one or two sides are sealed with a treated-liquid outlet being provided. In the direction perpendicular to the foregoing sealed face, when there exists a side at which no treated-liquid outlet is provided, as with the above-described both sides, the oppositely positioned portions of the filtering membrane are welded or bonded.

As described above, in the flat-membrane element of the present invention, the filtering membrane, the supporting member for placing the filtering membrane in the oppositely positioned manner with a space being provided, and the periphery-sealing portion are all flexible, so that the flat-membrane element is made flexible. In addition, the flat-membrane element has a thin thickness, rendering the element easy to flex.
Because of this structure, when air bubbling is generated by the aeration tube, vibration of the flat-membrane element is likely to occur owing to the contact with the air bubbles and the water stream produced by the air bubbling. Furthermore, the water stream of the treatment-undergoing liquid in contact with the outer surface of the filtering membrane can also cause the filtering membrane to easily vibrate.

In addition, it is desirable that the flat-membrane element have narrower width. When the width of the flat-membrane element becomes narrower, the element becomes easier to vibrate. In particular, the vibration in the twisting direction becomes easy. This type of vibration is effective in the peeling-off of the cake layer of the suspended matter deposited on the surface of the membrane.
The width of the flat-membrane module of the present invention can be set at any value. Usually, the width is 500 mm or less. It is desirable that the width be 200 mm or less. It is more and highly desirable that the width be 70 mm or less to form the shape of a tape.

As described above, when the flat-membrane element is caused to vibrate easily, the suspended matter adhering to the surface of the filtering membrane becomes unlikely to be deposited. Even when the suspended matter is deposited, the vibration can promote the action of peeling-off of the deposited matter. As a result, even when a smaller quantity of air is used for the aeration for the same membrane area, sludge and the like have less tendency to be deposited on the surface of the filtering membrane. In other words, the quantity of air to be supplied to the aeration tube can be decreased in comparison with the conventional case where a rigid supporter is used.
The present applicant conducted an experiment in which a flat-membrane-type separation membrane module incorporating the flat-membrane element of the present invention was compared with a flat-membrane-type separation membrane module incorporating a commercially available conventional flat-membrane element. The experiment revealed that the former was able to reduce the quantity of air supplied to the aeration tube by nearly one-half

The commercially available conventional flat-membrane element has a thickness of 6 to 8 mm or so. As described above, in the present invention, the thickness is reduced to 6 to 1 mm. In addition, the thickness can be further reduced to 3 to 1 mm.
By thinning the flat-membrane element as described above, when a flat-membrane-type separation membrane module is formed by arranging the flat-membrane elements in parallel with a spacing being provided, the thinning of the module can be achieved. Consequently, when the tank for containing a treatment-undergoing liquid has the same volume, the number of flat-membrane elements to be housed in the tank can be increased, thereby enhancing the ability to treat the treatment-undergoing liquid.

The above-described filtering membrane is composed of two oppositely positioned filtering membranes. A space having a proper size for the treated liquid to flow is provided between the two membranes by using a coarse porous material such as a net, nonwoven fabric, felt, or a perforated sheet. The peripheral edges of the filtering membranes are welded or bonded to form the above-described periphery-sealing portion with the foregoing treated-liquid outlet being provided.
Alternatively, the above-described filtering membrane is composed of a single filtering membrane bent to form a U shape with the foregoing space being provided as a flowing path for a treated liquid, and the peripheral edges of both side portions of the U shape are welded or bonded to form the above-described periphery-sealing portion with the forgoing treated-liquid outlet being provided.

The above-described welding can be performed by hot-pressing or laser-processing the peripheral edges of the filtering membranes.
When the above-described structure is employed, the periphery-sealing portion can be formed only by sealing the peripheral edges of the filtering membranes while maintaining the flowing path for the treated liquid between the filtering membranes by using the foregoing supporter.
When the above-described structure is employed, it is not necessary to use a periphery-sealing member usually formed by using a resin-molded product. Accordingly, the number of components can be reduced and the number of man-hours for the assembly work can be decreased, thereby reducing the cost and improving the productivity. In addition, because rigid periphery-sealing member is not used, the flexibility of the flat-membrane element is not impaired and therefore the flat-membrane element can easily vibrate.

Alternatively, the above-described periphery-sealing portion may be composed of a periphery-sealing member formed of a material having flexibility and the peripheral edge of the foregoing filtering membrane may be welded or bonded to the periphery-sealing member.
In this case, also, because flexibility is given to the periphery-sealing member, the flexibility of the flat-membrane element is not impaired and the vibration of the flat-membrane element can easily occur.
It is desirable that the periphery-sealing member be formed of a film, a nonwoven fabric, or a felt that has a thickness of 0.5 mm or less, desirably 0.1 mm or less, and that is made of hot-melt resin, such as polyethylene, polypropylene, or another polyolefin resin; polyester resin; or FEP, PFA, or another fluororesin. It is also desirable that the periphery-sealing member be formed of a rubber material, such as EPDM rubber or silicon rubber, having a thickness of 5.5 mm or less.

It is desirable that the foregoing filtering membrane be composed of a porous expanded polytetrafluoroethylene (PTFE) membrane or a laminated material formed by laminating a porous expanded PTFE membrane together with nonwoven fabric and either felt similar to nonwoven fabric or a net and that the foregoing supporter be composed of a net, a nonwoven fabric, a felt, a perforated sheet, or a laminated material of these, each of which has a total thickness of 5.5 mm or less.

When the filtering membrane is composed of a porous expanded PTFE membrane, because the membrane has high strength, even when a low-strength or soft supporter made of the foregoing net or the like each having thin thickness and high porosity is used as the supporter for securing the space as the flowing path for the treated liquid, the membrane can be used without a trouble such as the breakage of the membrane.
Furthermore, having high durability and excellent corrosion resistance, PTFE can exercise significant usefulness in the treatment of high turbidity wastewater.
Because, a porous expanded PTFE membrane is produced by undergoing the extrusion and expanding steps, the membrane can have fine pores with high porosity owing to high molecular orientation. Consequently, although the membrane forms a filtering membrane having high performance with a large quantity of permeating water, the filtering membrane does not develop cracks or suffer breakage even when vibration is generated by the aeration treatment, exhibiting excellent durability.

As described above, a porous expanded PTFE membrane has chemical stability, because it is unaffected by almost all chemicals, and excellent corrosion resistance. Generally, in comparison with a bulk body, a porous membrane having a large relative surface area tends to be damaged by chemicals and has low strength. A porous expanded PTFE membrane, however, is inert against almost all organic and inorganic chemicals, such as organic and inorganic acids, alkali, an oxidizing agent, a reducing agent, and an organic solvent. In other words, it has excellent chemical resistance. Consequently, unlike the conventional flat-membrane element, the PTFE membrane has no limitation in the use of cleaning chemical agents. Depending on the types of deposited matter, various chemicals can be selected to perform a long-time cleaning of the filtering membrane with high concentration as required. For example, to completely dissolve and remove and sterilize the biofouling, a sodium hypochlorite solution, a hydrogen peroxide solution, and another solution containing a strong oxidizing agent can be used at high concentration. To remove oil and the like in the wastewater, a strong alkaline solution containing sodium hydroxide or the like can be used.

It is desirable that the foregoing porous expanded PTFE membrane have a mean pore diameter of 0.01 to 5.0 µm. The mean pore diameter is measured with the Perm Porometer (type: CFP-1200A) made by Porous Material, Inc.
It is desirable that the porous expanded PTFE membrane have a particle-capturing rate of 90% or more for a particle having a diameter of 5 µm. In particular, when the treatment-undergoing liquid is a wastewater containing activated sludge or a wastewater containing minute particles, it is desirable that the particle-capturing rate for a particle having a diameter of 0.45 µm be 90% or more.

More specifically, the above-described porous expanded PTFE membrane has an average membrane thickness of 5 to 200 µm and a porosity of 50% or more. It is desirable that the porosity be 60% or more, more desirably 80% or more. The average membrane thickness is measured with a dial gauge, and the porosity is measured by the method stated in ASTM D792.
It is desirable that the porous expanded PTFE membrane have a tensile strength, specified in JIS K 7113, of 10 N/mm² or more.

The porous expanded PTFE membrane to be used as a filtering membrane refers to a membrane in which PTFE accounts for 80% or more in weight ratio. It is desirable that the weight ratio be 90% or more.
The types of thermoplastic fluororesin to be used together with the PTFE include PFA, FEP, ETFE, PCTFE, PVDF, and PVF. Of these, it is desirable to use FEP, which has a relatively low decomposition rate even at the melting-point peak or higher of PTFE (327°C or higher), more desirably PFA.
Furthermore, the above-described individual membrane including at least the expanded PTFE membrane may be used as the base to form a membrane in which the surface of the base is combined with a hydrophilic polymer or the like. For example, in the case of obtaining a hydrophilic property, a hydrophilic PTFE membrane can be produced by impregnating the membrane with polyvinyl alcohol and then by performing chemical crosslinking with dialdehyde or the like. The produced membrane can be applied to the present invention.

As described earlier, the filtering membrane is only required to be oppositely positioned with a space being provided for the treated liquid to pass. Two filtering membranes forming a pair may be oppositely positioned in parallel. Alternatively, the filtering membrane may be composed of a single filtering membrane that is bent to form a U shape so that oppositely positioned portions can be formed. Because the porous expanded PTFE membrane has sufficient bending strength and flexibility, even when it is bent, the filtration performance and strength are not impaired. Furthermore, when it is processed to form the U shape and the peripheries of the opposing two sides are welded or bonded to each other, this system eliminates the need to separately use the periphery-sealing member.

The above-described supporter, which is placed between the oppositely positioned filtering membranes to secure the space as the flowing path for the treated liquid, has no limitation on condition that it is made of flexible material and it can secure the path for the treated liquid. When the filtering membrane is composed of the porous expanded PTFE membrane having strength, as described above, a net (mesh), nonwoven fabric, felt, a perforated sheet, or another thin and flexible material is advantageously used as the supporter.
By employing the above structure, the total thickness of the flat-membrane element, which is the summation of the thicknesses of the supporter and the filtering membranes placed at its both sides, can be decreased, as described above, to 6 mm or less, desirably 3 mm or less, more desirably 2 mm or less. Furthermore, the total thickness can be decreased to a minimum of 1 mm.
It is desirable that the supporter and the filtering membrane be bonded or welded together either at least partially or entirely. In particular, it is desirable that the supporter made of a net, nonwoven fabric, or the like be partially fixed to the filtering membrane by spot bonding or the like without being completely fixed, because the amount of flexure of the filtering membrane can be further increased.

It is desirable that the foregoing supporter be formed of polyolefin resin, polyester resin, fluororesin, or the like, all of which not only have excellent chemical resistance but also can be hot-welded.
The foregoing polyolefin resin is advantageous in that it has low melting point, good processibility, and low susceptibility to hydrolysis.
Fluororesin-based material is advantageous in that at the time of cleaning, it is quite resistant to an extremely strong oxidative substance such as high-concentration ozone.

It is desirable that the flat-membrane element of the present invention have a weight of 400 to 2,000 g/m² (the area in g/m² refers not to the area of the membrane but to the area of the flat-membrane element).

As a second invention, the present invention offers a flat-membrane-type separation membrane module that is provided with a plurality of filtration purpose flat-membrane elements described above.
Although it is desirable to place the flat-membrane elements in parallel arrangement with a space being provided between them, it is not always required to place them in proper arrangement. It is only required to employ a structure in which a plurality of flat-membrane elements are placed with a space being provided between them. Depending on the purpose, the following placements may be employed: a radial configuration, a spiral configuration, a configuration formed of all sides of a polygon, a concentric-circle configuration, and so on.

When above-described flat-membrane elements are placed in proper arrangement with a spacing of 7 mm or less and 4 mm or more, it is desirable that when 100 elements are used, the unit have a lengthwise dimension of 500 to 1,000 mm as the average value, that when 200 elements are used, the unit have a lengthwise dimension of 1,000 to 1,500 mm as the average value, and that the unit have a lateral dimension of 500 to 600 mm as the average value. In the above description, when a plurality of flat-membrane elements are positioned in the vertical direction and arranged with their widthwise positions being aligned and a proper spacing being provided, the lengthwise dimension refers to the length in the direction of the arrangement.
In addition, it is desirable to employ a configuration in which elements having a width of, for example, 70 mm or less, desirably 50 mm or less, are placed in a row-and-column arrangement with the center of the element placement being staggered row by row in alternate position or being arranged in another manner. These elements are sealed with resin collectively. As described above, the element has narrow width and further reduced weight, so that the element is more likely to vibrate. Because the space is provided between the elements having the shape of a narrow tape, a swirl flow including air bubbles by aeration is likely to flow into the space. Consequently, the air bubbles can be more speedily distributed between the membranes and therefore the elements can be vibrated more.

The commercially available conventional flat-membrane-type separation membrane module has a membrane-to-membrane distance of 8 mm or more. On the other hand, as described above, in the present invention, the distance is less than 8 mm. More specifically, the distance is 7 mm or less. Furthermore, the distance is decreased to a range of 5 to 4 mm. The reason why the membrane-to-membrane distance can be decreased is that the flat-membrane element flexes easily and consequently the air bubbling from the aeration tube prevents the suspended matter from being deposited on the surface of the membrane of the flat-membrane element.
When the membrane-to-membrane distance is decreased, the membrane is likely to make contact at high efficiency with the air bubbles ejected from the ejecting holes of the aeration tube placed underneath the membrane. This efficient contact can cause the flat-membrane element to flex easily.
When the separation membrane module has the same number of flat-membrane elements as that of the conventional module, the decreasing of the membrane-to-membrane distance as described above can produce a thin, miniaturized separation membrane module. When the flat-membrane element has the same width as that of the conventional element, the foregoing decreasing can increase the number of flat-membrane elements attached, thereby increasing the treating ability.
Usually, 100 to 200 flat-membrane elements are attached to one flat-membrane-type separation membrane module.

As described above, when 100 flat-membrane elements are used, the separation membrane module has a lengthwise dimension of 500 to 1,000 mm as the average value. When 200 flat-membrane elements are used, the lengthwise dimension is 1,000 to 1,500 mm as the average value. In both cases, the separation membrane module has a lateral dimension of 500 to 600 mm as the average value.
For example, when 200 flat-membrane elements are used, the commercially available conventional flat-membrane unit has a lengthwise dimension of 2,000 mm or more. On the other hand, in the present invention, when the flat-membrane element has a thickness of 2.5 mm and the spacing between the membranes is 4 mm, the lengthwise dimension is 1,300 mm, which is 65% or less of the conventional dimension.
The reason why the area of the membrane of the flat-membrane element can be decreased as described above is that because a single membrane element has thin thickness and the element is likely to vibrate, the adhering of the deposited matter to the surface of the filtering membrane can be decreased or prevented and therefore the spacing between the membranes can be decreased. For that reason, in spite of the compact unit, the ability to treat the treatment-undergoing liquid can be enhanced. In other words, when the same area of the membrane as that of the conventional large flat-membrane element is employed and the same ability to treat the treatment-undergoing liquid as that of the foregoing conventional element is intended, the present invention enables the decrease in the placement area of the membrane. As a result, the flat-membrane element can be miniaturized.

It is desirable that the foregoing flat-membrane elements' spacing be fixed to an upper fixing member, that the upper fixing member be provided with a water-gathering port and a connecting tube for connecting to a water-gathering tube, and that the treated-liquid outlet of the foregoing flat-membrane element communicate with the water-gathering port. Alternatively, it is desirable that the treated-liquid outlet of the foregoing individual flat-membrane element be provided with a connecting tube for connecting to a water-gathering tube and that the connecting tube for connecting to a water-gathering tube be connected to a branched tube from the water-gathering tube to suspend the individual flat-membrane element.
A simple fixing jig is provided at the lower position of the individual elements because it is necessary both to prevent the membrane from dancing owing to the air bubbling and to maintain the position of the membrane to a certain extent. Alternatively, the fixation may be performed by using resin or the like. The fixation only at the lower position does not inhibit the vibration movement of the flat-membrane element caused by the air bubbles ejected from underneath in the filtration tank. As described later, when the individual flat-membrane element is suspended by connecting two treated-liquid outlets to the branched tubes of the water-gathering tubes, the fixing member can be eliminated. In this case, also, the jig for the positioning is necessary at the lower position. As with other configurations, the reason why the connection is performed at two places is to prevent the position of the elements from becoming irregular resulting from the mutual contact of the elements. When a water-gathering tube or water-gathering tubes provided with branched tubes are connected with the flat-membrane elements in advance to be assembled as a unit, at the time of the use, it is only required to connect the water-gathering tube or tubes. In this case, the usability can be improved.

In addition, a flat-membrane-type unit may be formed in which a frame is attached to the periphery of the above-described flat-membrane-type separation membrane module, a water-spraying tube is attached to the lower portion of the frame, and the water-spraying tube is placed underneath the foregoing flat-membrane elements.

The present invention also offers a filtration apparatus that has a feature in that:
(a) the above-described flat-membrane-type separation membrane module is suspended in a tank containing a treatment-undergoing liquid; and
(b) an aeration tube is placed underneath the separation membrane module and ejects air bubbles toward the space between the above-described flat-membrane elements of the foregoing separation membrane module.
In the apparatus, the quantity of air supplied to the foregoing aeration tube is 9 to 15 times the quantity of the permeating treated liquid.
The present inventor has found through an experiment that the quantity of air supplied to the foregoing aeration tube is nearly one-half that for aerating the commercially available conventional flat-membrane-type separation membrane module.

### Advantageous Effects of Invention

As described above, the filtration purpose flat-membrane element of the present invention is flexible, so that it vibrates when it is brought into contact with the air bubbles from the aeration tube. This vibration can prevent the suspended matter from adhering to the surface of the filtering membrane. Even when the suspended matter adheres and is deposited, the deposited matter can be peeled off and therefore the fouling is hard to occur.
The supporting member provided between the filtering membranes to secure the path for the treated liquid is thin, soft, and flexible, and the periphery-sealing portion has flexibility. Consequently, there exists no member that inhibits the vibration of the filtering membrane, so that the membrane can easily vibrate. As a result, the quantity of air ejected from the aeration tube can be decreased and therefore the running cost can be reduced. In particular, the effect can be further enhanced by narrowing the width of a single flat-membrane element.
As described above, because the entire flat-membrane element can be thinned, a flat-membrane-type separation membrane module provided with a multitude of flat-membrane elements can be thinned and miniaturized.

### Brief Description of Drawings

Figure 1 shows the filtration purpose flat-membrane element of a first embodiment, in which (A) is a front view, (B) is a cross-sectional view at the line B-B in (A), (C) is a partial front view in a state where a filtering portion at one face side is removed, and (D) and (E) are partial perspective views.
Figure 2 (A) and (B) is diagrams showing examples of modification of the flat-membrane element.
Figure 3 shows an embodiment of a flat-membrane-type separation membrane module, in which (A) is a perspective view, (B) is a top view, and (C) is a partial cross-sectional view.
Figure 4 shows a first example of modification of the flat-membrane-type separation membrane module, in which (A) is a perspective view, (B) is a plan view showing the configuration of the flat-membrane elements, and (C) is a diagram showing the state where a fixing jig is attached to the lower end of the flat-membrane elements.
Figure 5 is a perspective view showing a second example of modification of the flat-membrane-type separation membrane module.
Figure 6 is a schematic diagram showing a third example of modification of the flat-membrane-type separation membrane module.
Figure 7 is a schematic cross-sectional view showing an embodiment of a filtration apparatus.

### Description of Embodiments

An explanation is given below to the embodiments of the present invention by referring to the drawing.

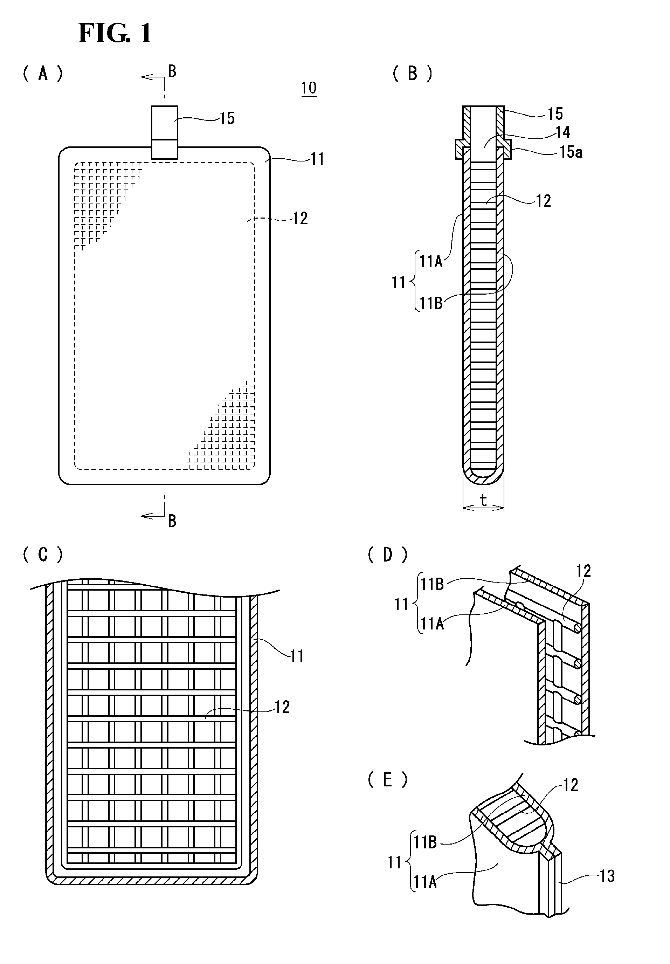

Figure 1 (A) to (E) shows a first embodiment of the present invention.
A flat-membrane element 10 of the first embodiment is immersed in a treatment-undergoing liquid containing suspended matter with high turbidity to perform solid-liquid separation treatment. The element 10 is to be used in the membrane bioreactor process by immersing it in an aeration tank containing sewage and activated sludge.

The flat-membrane element 10 is provided with a filtering membrane 11, which is formed of a porous expanded PTFE sheet and has a U shape having a bent portion at the bottom, and a supporter 12, which is formed of a polyethylene-resin net and is placed between oppositely positioned filtering portions 11A and 11B of the filtering membrane 11. Thus, the element 10 secures a space as a flowing path for a treated liquid.
In the filtering membrane 11, in the state of being bent in the U shape, the peripheral edges of the oppositely positioned filtering portions 11A and 11B are thermowelded to each other and sealed to form a periphery-sealing portion 13 with a treated-liquid outlet 14 being provided at the upper end.

At the treated-liquid outlet 14, a flange 15a of a tube member 15 to be connected to a water-gathering tube is thermowelded with the filtering membrane 11 to achieve a sealed condition in the form of a protrusion.
The net forming the supporter 12 has a thickness of about 1.9 mm, each of the oppositely positioned filtering portions at both sides has a thickness of 0.3 mm or less, and consequently the flat-membrane element 10 has a total thickness (t) as thin as about 2.5 mm.

The supporter 12 is partially thermowelded and fixed to the oppositely positioned filtering portions 11A and 11B of the filtering membrane 11. The supporter 12 may be freely positioned without fixing. It is desirable, however, to partially fix the supporter 12 both to hold it at the predetermined position and to increase the supporting strength of the filtering membrane 11.
The net, which forms the supporter 12, is provided not only with a multitude of flowing paths communicating with the treated-liquid outlet 14 but also with a multitude of flowing paths at each face that faces one of the oppositely positioned filtering portions 11A and 11B. As a result, the net allows the treated liquid having passed through the oppositely positioned filtering portions 11A and 11B to flow smoothly at the inside of the supporter 12 and arrive at the treated-liquid outlet 14.

The porous expanded PTFE membrane, which forms the filtering membrane 11, may be composed of either a single layer or multiple layers. The PTFE membrane used has pores of 0.01 to 10 µm and has a particle-capturing rate of 90% or more for particles having a diameter of 0.45 µm. The PTFE membrane has an average thickness of 5 to 200 µm. In the PTFE membrane, the fibrous skeleton enclosing the pore has an average maximum length of 5 µmor less. The filtering membrane 11 has a tensile strength of 10 N/mm² or more. Even when immersed in a solution containing 3 mass % sulfuric acid, a solution containing 4 mass % sodium hydroxide, and a sodium hypochlorite solution having an available chlorine concentration of 10% separately at a temperature of 50°C and for 10 days, the filtering membrane 11 does not decrease the permeating rate of water without being damaged, proving that it has excellent chemical resistance.

As described above, the flat-membrane element 10 is composed of the filtering membrane 11 formed of a porous expanded PTFE membrane and the supporter 12 formed of a net. Consequently, the flat-membrane element 10 itself can be easily bent, that is, flexible. In addition, because the filtering membrane 11 is made of PTFE, which is relatively strong and can maintain the planar structure, the filtering membrane 11 maintains the shape although it is flexible. Furthermore, the flat-membrane element 10 has a total thickness as extremely thin as 2.5 mm. As described above, the flat-membrane element 10 is thin and flexible. Consequently, as described below, when it is immersed in a filtration tank and air is ejected from an aeration tube placed at the lower portion to form bubbles, the filtering faces 11A and 11B vibrate resulting from the contact with the bubbles.

The flat-membrane element 10 of the present invention is not limited to the foregoing embodiment. The net forming the supporter 12 may be a net made of metal covered with resin. The filtering membrane may be composed of two filtering membranes. In this case, in the state where a supporter is placed between the filtering membranes, the peripheral edges of the filtering membranes may be welded or bonded to each other to form the shape of a sack with a treated-liquid outlet being provided at the upper end.

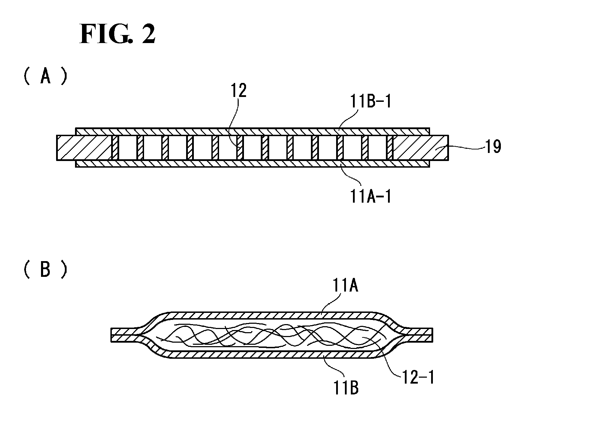

In addition, as shown in Fig. 2 (A), two filtering membranes 11A-1 and 11B-1 are provided; along the peripheral edges of these, a periphery-sealing member 19 is placed that is formed of a flexible peripheral flame portion made of PFA, FEP, or polyolefin resin; and the peripheral edges of the filtering membranes 11A-1 and 11B-1 are welded or bonded to both side faces of the periphery-sealing member 19.
In the second example of modification shown in Fig. 2 (B), a supporter 12-1 is formed by using nonwoven fabric in place of the net.
Furthermore, the supporter 12 may be formed by using a perforated sheet made of PTFE or polyolefin resin in place of the net and nonwoven fabric.

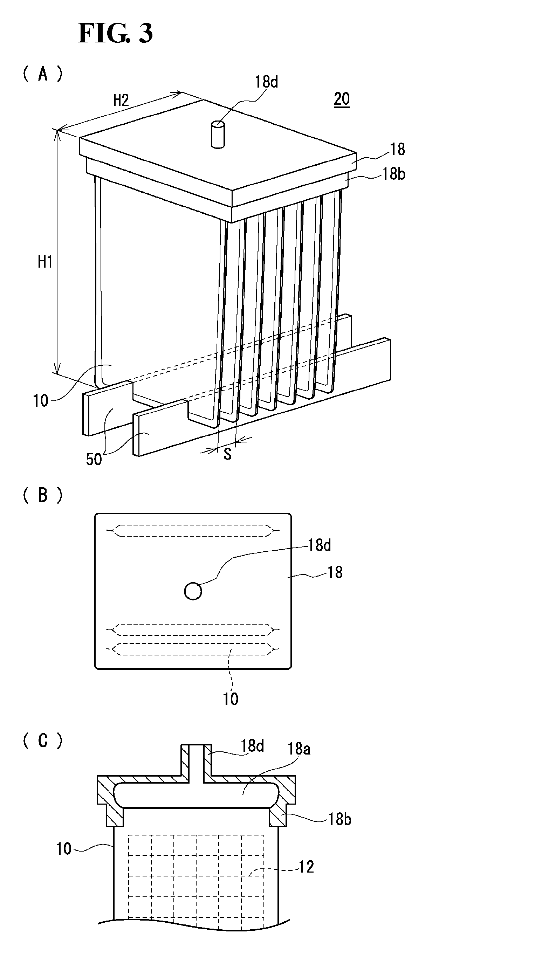

As shown in Fig. 3 (A) to (C), a multitude of the flat-membrane elements 10 are assembled as a flat-membrane-type separation membrane module 20 by holding them by using an upper fixing member 18 with spacings being maintained at the upper end.
The upper fixing member 18 is provided with a lower frame portion 18b having a water-gathering port 18a that has an opened structure at the lower end. The upper portions of the individual flat-membrane elements 10 are molded to the lower frame portion 18b to fix the treated-liquid outlets 14 of the flat-membrane elements 10 so that the outlets 14 can communicate with the water-gathering port 18a.
A connecting tube 18d, which communicates with the water-gathering port 18a, is provided in the form of a protrusion on the upper face of the upper fixing member 18 so that the connecting tube 18d can be connected to a water-gathering tube 21.
The upper fixing member 18 is formed of polypropylene resin, polyethylene resin, or another hot-melt plastic material. The flat-membrane-type separation membrane module 20 is provided with fixing jigs 50 for performing the positioning of the individual flat-membrane elements.

In the flat-membrane-type separation membrane module 20, 100 to 200 flat-membrane elements 10 are placed in proper arrangement with a spacing, S, of 7 mm or less and 4 mm or more.
In this embodiment, 200 flat-membrane elements 10, which has a thickness of 2.5 mm as described before, are assembled with a spacing of 4 mm. As a result, the module 20 has a lengthwise dimension, H2, of 1,300 mm and a lateral dimension, H1, of 560 mm.
A majority of the commercially available conventional flat-membrane-type separation membrane modules have a lengthwise dimension of 2,200 mm or so. On the other hand, the present invention miniaturizes the module by decreasing the lengthwise dimension to about 60% that of the conventional module. Despite the decreased dimension, the filtering membrane 11 has nearly the same filtering area as that of the conventional filtering membrane.

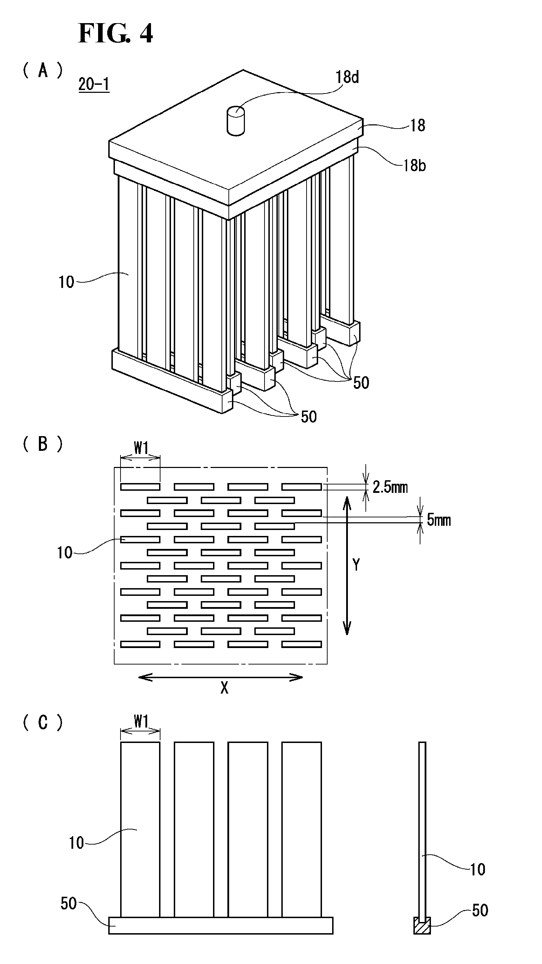

Figure 4 (A) to (C) show a first example of modification of the flat-membrane-type separation membrane module. In a flat-membrane-type separation membrane module 20-1 of the first example of modification, the width of the flat-membrane element 10 is reduced to W1 to configure a multitude of flat-membrane elements with a proper spacing being provided. More specifically, a single flat-membrane element 10 of the first embodiment is divided into a plurality of elements, for example, 3 to 4 elements. The divided elements are placed to form a staggered arrangement in which spacings are provided in the X direction and a spacing of about 5 mm is provided in the Y direction.
In the first example of modification, the individual flat-membrane element 10 has a width, W1, of 50 mm and a thickness of 2.5 mm. Fixing jigs 50 each have a groove, and each fixing jig is placed in the X direction to fix the lower ends of the flat-membrane elements 10 arranged in the X direction. A structure may be employed in which the upper fixing member 18 is omitted.

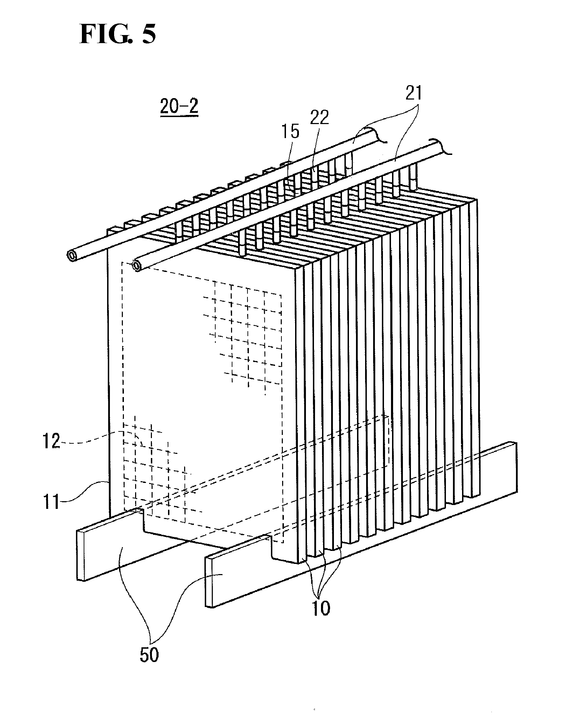

Figure 5 shows a second example of modification of the flat-membrane-type separation membrane module.
In a flat-membrane-type separation membrane module 20-2 of the second example of modification, the tube members 15, which are attached to the upper end of the flat-membrane element 10, are connected to branched tubes 22 from two water-gathering tubes 21. Under this condition, a plurality of flat-membrane elements 10 are suspended in parallel arrangement with predetermined spacings being maintained. Thus, the flat-membrane-type separation membrane module 20-2 is assembled. Fixing jigs 50 are provided at the lower portion to position the individual flat-membrane elements 10.

In the cases where the flat-membrane-type separation membrane modules of the first and second examples of modification are used, also, the aeration tube is provided at the lower portion to generate air bubbling.
In the flat-membrane-type separation membrane modules 20-1 and 20-2, the positioning of the multitude of flat-membrane elements in parallel arrangement is maintained by using only the minimal constraint means provided at the upper and lower portions. No rigid frame or plate material is used to fix the individual flat membranes. Consequently, the flat-membrane element 10 is not inhibited from vibrating. In addition, having few structural components, the module can be miniaturized and reduced in weight.

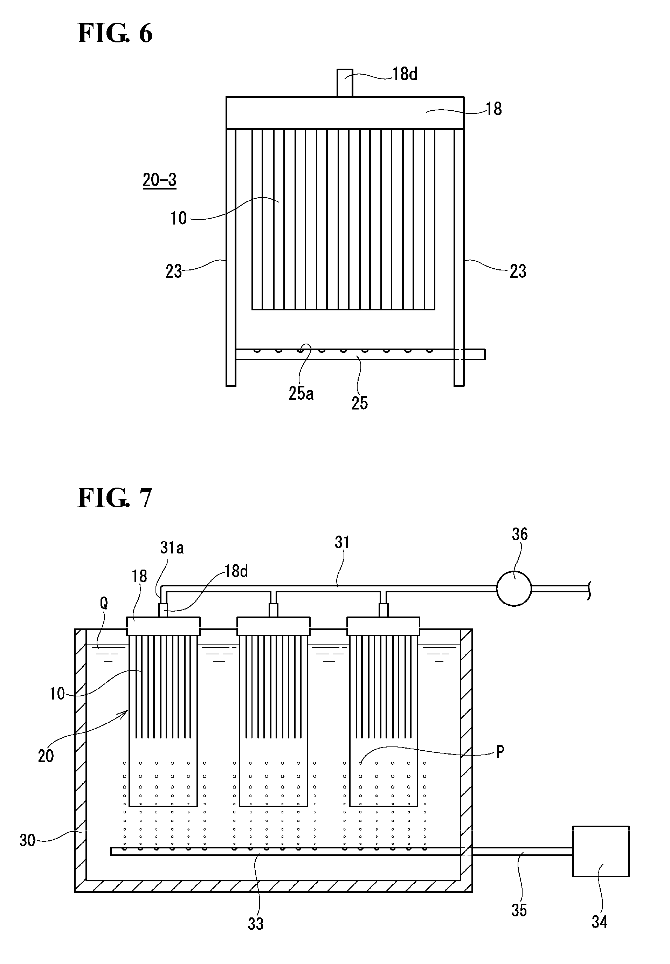

Figure 6 shows a third example of modification of the flat-membrane-type separation membrane module.
In a flat-membrane-type separation membrane module 20-3 of the third example of modification, a frame 23 is suspended from the peripheral face of the upper fixing member 18, which is similar to the one provided in the embodiment shown in Figure 3. An aeration tube 25 is attached to the lower portion of the frame. Ejecting holes 25a formed on the upper face of the aeration tube 25 are provided such that they are positioned at the spacing between the flat-membrane elements 10. As a result, the air bubbling is generated between the neighboring flat-membrane elements.

As shown in Fig. 7, the flat-membrane-type separation membrane module 20 shown in Figure 3 is suspended in a filtration tank 30 to which a treatment-undergoing liquid Q containing suspended matter is supplied. Thus, the module is used as an immersion-type external-pressure suction filtration apparatus.
The connecting tube 18d of the upper fixing member 18 of the individual flat-membrane-type separation membrane module 20 is connected to a branched tube 31a of a water-gathering tube 31. Thus the individual modules are suspended in the filtration tank 30. The water-gathering tube 31 is connected to a suction pump 36.
An aeration tube 33 is placed at the lower portion of the filtration layer 30. Air is ejected from the aeration tube 33 toward the place between the neighboring flat-membrane elements 10 of the flat-membrane-type separation membrane module 20 to generate air bubbling.
The air is supplied to the aeration tube 33 from a blower 34 through an installed pipe 35. The quantity of the air supplied to the aeration tube 33 from the blower 34 is 9 to 15 times the quantity of the permeating treated water in terms of a unit time and a unit area of the membrane. The foregoing quantity of the supplied air is about half that of the commercially available conventional flat-membrane-type separation membrane module.

An explanation is given below to the operation of the filtration apparatus incorporating the flat-membrane-type separation membrane module 20 when the apparatus is used to treat wastewater by the membrane bioreactor process.
The wastewater Q supplied to the filtration tank 30 has mixed liquor suspended solids (MLSS) of 5,000 to 20,000 mg/L. The driving of the suction pump 36 connected to the water-gathering tube 31 forces the wastewater Q to permeate the filtering membrane 11 of the individual flat-membrane elements 10 to perform the solid-liquid separation. The treated liquid having permeated the filtering membrane 11 flows into the branched tube 31a through the treated-liquid outlet 14 to be recovered.

To prevent the suspended matter from adhering to the surface of the flat-membrane element 10 and to remove the adhering suspended matter by peeling it off, pressurized air is ejected from the aeration tube 33 to generate air bubbles P for performing the air bubbling.
The bubbles ascend while making contact with the outer surface of the filtering membrane 11 of the flat-membrane element 10. The flat-membrane element 10 becomes easy to flex by the action of the contact with the bubbles, of the water stream produced by the air bubbling, and of the water stream produced by the suction of the suction pump 36. Thus, vibration occurs in the flat-membrane element 10. The vibration can not only prevent the suspended matter from adhering to the surface of the filtering membrane 11 but also remove the adhering suspended matter by peeling it off, rendering the filtering membrane unlikely to develop fouling. As a result, the filtration operation can be continued stably. The air bubbling may be carried out continuously or periodically.

The present invention is not limited to the above-described embodiments and examples and includes modifications within the scope equivalent to the scope of the claims.

### Reference Signs List

10: flat-membrane element
11: filtering membrane
12: supporter
13: periphery-sealing portion
14: treated-liquid outlet
20: flat-membrane-type separation membrane module
30: filtration layer
31: water-gathering tube
33: aeration tube

## Claims

1. A filtration purpose flat-membrane element, comprising:
(a) a sheet-shaped filtering membrane that has oppositely positioned portions placed with a space between them being provided as a flowing path for a treated liquid;
(b) a supporter that is placed between the oppositely positioned portions of the filtering membrane to secure the space as a flowing path for a treated liquid; and
(c) a periphery-sealing portion that seals the peripheral edges of the oppositely positioned portions of the filtering membrane with a treated-liquid outlet being provided;
wherein the filtering membrane and the supporter are formed by using flexible material and the periphery-sealing portion has flexibility, thereby rendering the entire element flexible;
the flat-membrane element having a total thickness of 6 to 1 mm.

2. The filtration purpose flat-membrane element as defined by claim 1, wherein:
(a) the filtering membrane is composed of two oppositely positioned filtering membranes, and the peripheral edges of the filtering membranes are welded or bonded to form the periphery-sealing portion with the treated-liquid outlet being provided; or
(b) the filtering membrane is composed of a single filtering membrane bent to form a U shape with the space being provided as a flowing path for a treated liquid, and the peripheral edges of both side portions of the U shape are welded or bonded to form the periphery-sealing portion with the treated-liquid outlet being provided

3. The filtration purpose flat-membrane element as defined by claim 1, wherein the periphery-sealing portion is composed of a periphery-sealing member formed of a material having flexibility and the peripheral edge of the filtering membrane is welded or bonded to the periphery-sealing member.

4. The filtration purpose flat-membrane element as defined by any one of claims 1 to 3, wherein:
(a) the filtering membrane is composed of a porous expanded PTFE membrane or a laminated material formed by laminating a porous expanded PTFE membrane together with nonwoven fabric and a material similar to nonwoven fabric; and
(b) the supporter is composed of nonwoven fabric, a net, felt, a perforated sheet, or a laminated material of these.

5. The filtration purpose flat-membrane element as defined by any one of claims 1 to 4, having a weight of 400 to 2,000 g/m².

6. A flat-membrane-type separation membrane module, being provided with a plurality of filtration purpose flat-membrane elements as defined by claim 1 or 2 with a space being provided between them.

7. The flat-membrane-type separation membrane module as defined by claim 6, having a feature in that:
(a) the module comprises 100 to 200 flat-membrane elements as defined by claim 6, the elements being placed in proper arrangement with a spacing of 7 mm or less and 4 mm or more; and
(b) the module has a lengthwise dimension of 500 to 1,500 mm as the average value and a lateral dimension of 500 to 600 mm as the average value.

8. The flat-membrane-type separation membrane module as defined by claim 6 or 7, having a structure in which:
(a) the flat-membrane elements' spacing is fixed to an upper fixing member, the upper fixing member is provided with a water-gathering port and a connecting tube for connecting to a water-gathering tube, and the treated-liquid outlet of the flat-membrane element communicates with the water-gathering port; or
(b) the treated-liquid outlet of the individual flat-membrane element is provided with a connecting tube for connecting to a water-gathering tube, the connecting tube for connecting to a water-gathering tube is connected to a branched tube from the water-gathering tube, and the individual flat-membrane element is suspended at two or more places.

9. A filtration apparatus, having a feature in that:
(a) the flat-membrane-type separation membrane module as defined by any one of claims 6 to 8 is suspended in a tank containing a treatment-undergoing liquid; and
(b) an aeration tube is placed underneath the separation membrane module and ejects air bubbles toward the space between the flat-membrane elements of the separation membrane module.

10. The filtration apparatus as defined by claim 9, wherein the quantity of air supplied to the aeration tube per area of the membrane is at least 9 times and at most 15 times the quantity of membrane-permeating water per area of the membrane.
